(19) Europäisches Patentamt
European Patent Office
Office européen des brevets

(11) EP 4 279 448 A1

(12) EUROPEAN PATENT APPLICATION
published in accordance with Art. 153(4) EPC

(43) Date of publication:
**22.11.2023 Bulletin 2023/47**

(21) Application number: **22739371.7**

(22) Date of filing: **11.01.2022**

(51) International Patent Classification (IPC):
***C01B 21/064*** *(2006.01)* ***C08K 3/38*** *(2006.01)*
***C08L 101/00*** *(2006.01)*

(52) Cooperative Patent Classification (CPC):
**C01B 21/064; C08K 3/38; C08L 101/00**

(86) International application number:
**PCT/JP2022/000491**

(87) International publication number:
**WO 2022/153964 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.01.2021 JP 2021004348**

(71) Applicant: **Tokuyama Corporation**
**Shunan-shi, Yamaguchi 745-8648 (JP)**

(72) Inventors:
- **IKEDA, Yuuichi**
**Shunan-shi, Yamaguchi 745-8648 (JP)**
- **DAIKI, Shota**
**Shunan-shi, Yamaguchi 745-8648 (JP)**

(74) Representative: **Dehns**
**St. Bride's House**
**10 Salisbury Square**
**London EC4Y 8JD (GB)**

# (54) HEXAGONAL BORON NITRIDE POWDER

(57) Provided are a boron nitride powder having a relatively small particle size, in which an amount of metal impurities present on a surface of the boron nitride powder is significantly reduced, and extremely high purity is achieved, and a method for producing the boron nitride powder.

A hexagonal boron nitride powder has an average particle size (D50) of 2.0 to 6.0 um and a specific surface area measured by a BET method of 4 to 12 $m^2/g$, in which a concentration of a calcium element is 1 ppm or less, a concentration of a silicon element is 5 ppm or less, a concentration of a sodium element is 5 ppm or less, and a concentration of an iron element is 1 ppm or less on a surface of hexagonal boron nitride particles constituting the powder, the hexagonal boron nitride powder preferably has an average aspect ratio (major axis/thickness) of 1 to 7, and is useful as a filler for resin.

EP 4 279 448 A1

## Description

### Technical Field

The present invention relates to a novel hexagonal boron nitride powder. Specifically, the present invention provides a high purity hexagonal boron nitride powder having an extremely small amount of metal element impurities, which cannot be produced by a conventional production method.

### Background Art

Hexagonal boron nitride is a white powder having a hexagonal layered structure, and has many excellent properties such as thermal conductivity, electrical insulation properties, lubricity, corrosion resistance, mold release properties, high temperature stability, and chemical stability, and thus is used in many applications such as fillers such as a thermally conductive insulating heat dissipation sheet, a highly flexible thermally conductive silicon rubber, a heat dissipation grease, a heat dissipation sealant, and a semiconductor sealing resin, a mold release agent for a molten metal or a molten glass mold, a solid lubricant, and a cosmetic raw material.

Further, as typical methods for producing hexagonal boron nitride, for example

(1) a melamine method of reducing and nitriding a boron oxide such as boric acid or boron oxide with a nitrogen-containing compound such as melamine, and
(2) a reduction nitridation method in which boron oxide and a carbon source are reacted with nitrogen at high temperature for reduction and nitridation,

are known.

In the application of the hexagonal boron nitride, a heat dissipation material such as a thermally conductive insulating heat dissipation sheet is used by highly filling a matrix such as a resin with hexagonal boron nitride powder, and is used as a heat dissipation layer of a semiconductor device on which a semiconductor element is mounted.

Under such circumstances, as higher integration of semiconductor devices has progressed, higher insulation resistance has been required in the heat dissipation layer. It is said that the insulation resistance of the heat dissipation layer is greatly affected by impurity concentration on a surface of the hexagonal boron nitride powder filled in the heat dissipation layer.

On the other hand, in the semiconductor device, miniaturization of the device has been advanced together with high integration, and a demand for a thermally conductive insulating heat dissipation sheet having a thickness of about 10 um to 50 um as a heat dissipation layer is also increasing. Therefore, Therefore, boron nitride powder obtained by the melamine method, which is suitable for producing boron nitride powder having a relatively small particle size, is considered effective for producing such extremely thin sheets.

However, it is difficult to highly wash the boron nitride powder obtained by the melamine method due to its small particle size, and in fact, there has not yet been reported a case of achieving extremely high purity in the boron nitride powder produced by the melamine method. In addition, there is also known a boron nitride powder in which the boron nitride powder obtained by the melamine method is crystal-grown in a flux containing lithium carbonate to reduce an aspect ratio (major axis/thickness), however, a hexagonal boron nitride powder obtained by such a method is also a boron nitride powder including particles having a small particle size, and still has the same problem.

### Summary of Invention

### Technical Problem

Therefore, an object of the present invention is to provide a boron nitride powder having a relatively small particle size, in which an amount of metal impurities present on a surface of the boron nitride powder is significantly reduced, and extremely high purity is achieved, and a method for producing the boron nitride powder.

### Solution to Problem

As a result of intensive studies, the present inventors have succeeded in obtaining a boron nitride powder with extremely high purity, which could not be achieved by a conventional method, by combining a specific treatment with an acid aqueous solution and a specific treatment with pure water for a boron nitride powder having a relatively small particle size obtained by a method represented by a melamine method, and have completed the present invention.

That is, according to the present invention, there is provided a hexagonal boron nitride powder having an

average particle size (D50) of 2.0 to 6.0 um and a specific surface area measured by a BET method of 4 to 12 $m^2/g$, in which a concentration of a calcium element is 1 ppm or less, a concentration of a silicon element is 5 ppm or less, a concentration of a sodium element is 5 ppm or less, and a concentration of an iron element is 1 ppm or less on a surface of hexagonal boron nitride particles constituting the powder.

Furthermore, the boron nitride powder of the present invention preferably has an average aspect ratio (major axis/thickness) of 1 to 7.

The hexagonal boron nitride powder of the present invention is useful as a filler for resin because of the above characteristics.

Further, the hexagonal boron nitride powder of the present invention can be produced by a method including: an acid washing step of adding an acid aqueous solution obtained by mixing hydrochloric acid having an iron element of 1 ppm or less and an ignition residue of 5 ppm or less with pure water having a conductivity at 25°C of 5 μS/cm or less to a coarse hexagonal boron nitride powder obtained by a melamine method to form a slurry having a pH adjusted to 1 or less, and stirring and washing the slurry for 8 to 15 hours while maintaining a range of the pH; and a water washing step of supplying the boron nitride powder obtained in the acid washing step into a filter, performing filtration while supplying pure water having a conductivity at 25°C of 5 μS/cm or less, and bringing the boron nitride powder into contact with the pure water until a pH of a filtrate becomes 6 or more.

Advantageous Effects of Invention

The hexagonal boron nitride powder of the present invention has a small particle size such that the average particle size (D50) is 2.0 to 6.0 um and the specific surface area measured by the BET method is 4 to 12 $m^2/g$, but has an extremely low concentration of metal impurities and a low amount of boron oxide on the surface of the hexagonal boron nitride particles constituting the powder, and thus, when the hexagonal boron nitride powder is used to be highly filled in a matrix such as a resin as a filler, and used as the heat dissipation layer of the semiconductor device on which the semiconductor element is mounted, the hexagonal boron nitride powder can exhibit extremely excellent insulation resistance, and high heat dissipation characteristics that the hexagonal boron nitride originally has.

In addition, according to the method for producing the hexagonal boron nitride powder of the present invention, the high purity hexagonal boron nitride powder can be reliably produced.

Description of Embodiments

<Hexagonal boron nitride powder>

The hexagonal boron nitride powder of the present invention is a hexagonal boron nitride powder having an average particle size (D50) of 2.0 to 6.0 um and a specific surface area measured by a BET method of 4 to 12 $m^2/g$, in which a concentration of a calcium element is 1 ppm or less, a concentration of a silicon element is 5 ppm or less, a concentration of a sodium element is 5 ppm or less, and a concentration of an iron element is 1 ppm or less on a surface of hexagonal boron nitride particles constituting the powder.

The hexagonal boron nitride powder has a small particle size due to a production method by a melamine method to be described later, and particles obtained by using a flux method in combination with the melamine method include plate-like hexagonal boron nitride primary particles having a large wall thickness. As described above, such a hexagonal boron nitride powder containing hexagonal boron nitride particles having a small particle size is extremely difficult to be purified by washing, and there has been no hexagonal boron nitride powder that has been highly purified to the above level.

The hexagonal boron nitride powder of the present invention has an average particle size (D50) of 2.0 um to 6.0 um. An upper limit of the average particle size (D50) is preferably 5.0 um or less, and more preferably 4.0 um or less. In addition, a lower limit of the average particle size (D50) is preferably 3.0 um or more. When preparing a resin sheet having a thin sheet thickness of 10 to 50 μm, which has been increasingly demanded in recent years, the hexagonal boron nitride powder having the above average particle size is used as a filler useful for maintaining smoothness of a sheet surface without the filler protruding on the sheet surface, and the resin sheet filled with the hexagonal boron nitride powder with high purity as described later while having such a size exhibits high insulation resistance as well as thermal conductivity imparted by the hexagonal boron nitride powder.

Note that as described in detail in Examples, the average particle size (D50) is measured by a laser diffraction/scattering method using a boron nitride powder dispersed in ethanol as a measurement sample, and indicates an average value of particle sizes of hexagonal boron nitride aggregate particles formed by the hexagonal boron nitride primary particles alone or aggregated.

The hexagonal boron nitride powder of the present invention has a specific surface area of 4 to 12 $m^2/g$, more preferably 4 to 10 $m^2/g$, still more preferably 5 to 10 $m^2/g$, and particularly preferably 6 to 10 $m^2/g$ as measured by the BET method. The fact that the specific surface area is in the above range means that the hexagonal boron nitride primary

particles constituting the hexagonal boron nitride powder have a small particle size.

In addition, when the hexagonal boron nitride primary particles constituting the hexagonal boron nitride powder of the present invention have a relatively large wall thickness and little aggregation, the specific surface area of the hexagonal boron nitride powder tends to fall within the above range, and thus, when the hexagonal boron nitride powder is kneaded into a resin, an increase in viscosity of a resin composition is suppressed, and the resin is easily filled with the hexagonal boron nitride powder. As a result, the resin sheet prepared using the hexagonal boron nitride powder according to one embodiment of the present invention exhibits good thermal conductivity and good insulation resistance.

The greatest feature of the hexagonal boron nitride powder of the present invention is that as a concentration of metal impurities on the surface of the hexagonal boron nitride particles constituting the powder, the concentration of the calcium element is 1 ppm or less, the concentration of the silicon element is 5 ppm or less, the concentration of the sodium element is 5 ppm or less, and the concentration of the iron element is 1 ppm or less. More preferably, the concentration of the calcium element is 0.5 ppm or less, the concentration of the silicon element is 4 ppm or less, the concentration of the sodium element is 3 ppm or less, and the concentration of the iron element is 0.5 ppm or less. The fact that the concentration of metal impurities on the surfaces of the hexagonal boron nitride particles constituting the hexagonal boron nitride powder of the present invention is in the above range makes it possible to fully exhibit the insulation resistance inherent to hexagonal boron nitride when the resin sheet is prepared using the hexagonal boron nitride powder according to the embodiment of the present invention.

Note that in the present invention, the concentration of metal impurities on the surfaces of the hexagonal boron nitride particles constituting the hexagonal boron nitride powder was measured by a method in which the hexagonal boron nitride powder was immersed in a sulfuric acid aqueous solution having a concentration of 0.04 mol/L at 25°C for 120 minutes, and then a recovered liquid was subjected to elemental analysis by ICP emission spectrometry, as described in detail in Examples.

Further, the hexagonal boron nitride powder of the present invention preferably has an average aspect ratio (major axis/thickness) of 1 to 7, more preferably 1 to 6, and still more preferably 1 to 5. The average aspect ratio is particularly preferably 1 to 4. The fact that the average aspect ratio of the hexagonal boron nitride powder is in the above range indicates that the hexagonal boron nitride primary particles are plate-like particles having a relatively large wall thickness as also specified by the specific surface area.

Note that, the aspect ratio of the hexagonal boron nitride primary particles represents an average value measured by a measurement method described in Examples described later.

An oxygen content of the hexagonal boron nitride powder of the present invention is not particularly limited, but when the hexagonal boron nitride powder is used for a heat dissipation material application, the oxygen content is preferably 1.0 mass% or less because the thermal conductivity tends to decrease when the oxygen content is high. Note that in the case of a hexagonal boron nitride powder produced by the melamine method, the oxygen content is generally about 0.1 mass% to 1.0 mass%. The oxygen content of the hexagonal boron nitride powder represents a value measured by a measurement method described in Examples described later.

<Resin composition>

The resin composition can be obtained by blending the hexagonal boron nitride powder of the present invention and the resin. The resin composition can be used as, for example, the resin sheet, and the hexagonal boron nitride powder of the present invention can provide a resin sheet exhibiting high thermal conductivity and high dielectric strength. In the resin composition obtained, since the hexagonal boron nitride powder has an extremely high purity, a resin composition having improved insulation resistance can be formed, and the above effect can be exhibited in a molded body of the resin composition, for example, the resin sheet.

A resin constituting the resin composition is not particularly limited, and may be, for example, a silicone-based resin or an epoxy-based resin. Examples of the epoxy-based resin include bisphenol A type epoxy resin, bisphenol S type epoxy resin, bisphenol F type epoxy resin, bisphenol A type hydrogenated epoxy resin, polypropylene glycol type epoxy resin, polytetramethylene glycol type epoxy resin, naphthalene type epoxy resin, phenylmethane type epoxy resin, tetrakisphenol methane type epoxy resin, biphenyl type epoxy resin, phenol novolac type epoxy resin, tetrafunctional naphthalene type epoxy resin, cresol novolac type epoxy resin, dicyclopentadiene type epoxy resin, trisphenol epoxy resin, naphthol novolac epoxy resin, naphthylene ether type epoxy resin, aromatic glycidylamine type epoxy resin, hydroquinone type epoxy resin, stilbene type epoxy resin, triphenolmethane type epoxy resin, aralkyl type epoxy resin, polypropylene glycol type epoxy resin, polysulfide modified epoxy resin, epoxy resin having a triazine nucleus in its skeleton, and bisphenol A alkylene oxide adduct type epoxy resin. One of these epoxy resins may be used alone, or two or more thereof may be used in combination. Further, as a curing agent, for example, an amine-based resin, an acid anhydride-based resin, a phenol-based resin, imidazoles, an active ester-based curing agent, a cyanate ester-based curing agent, a naphthol-based curing agent, or a benzoxazine-based curing agent may be used. One of these curing agents may also be used alone, or two or more thereof may be used in combination. A blending amount of the

curing agents based on the epoxy resin is 0.5 to 1.5 equivalent ratio, and preferably 0.7 to 1.3 equivalent ratio in terms of an equivalent ratio based on the epoxy resin. In the present specification, the curing agents are also included in the resin.

Further, as the silicone-based resin, a known curable silicone resin that is a mixture of an addition reaction type silicone resin and a silicone-based crosslinking agent can be used without limitation. Examples of the addition reaction type silicone resin include polyorganosiloxanes such as polydimethylsiloxane having an alkenyl group such as a vinyl group or a hexenyl group as a functional group in a molecule thereof. Examples of the silicone-based crosslinking agent include polyorganosiloxanes having a silicon-bonded hydrogen atom, such as a dimethylhydrogensiloxy group-terminated dimethylsiloxane-methylhydrogensiloxane copolymer, a trimethylsiloxy group-terminated dimethylsiloxane-methylhydrogensiloxane copolymer, a trimethylsiloxane group-terminated poly(methylhydrogen siloxane), and poly(hydrogen silsesquioxane). Further, as a curing catalyst, for example, a known platinum-based catalyst used for curing the silicone-based resin can be used without limitation. Examples of the curing catalyst include particulate platinum, particulate platinum supported on carbon powder, chloroplatinic acid, alcohol-modified chloroplatinic acid, an olefin complex of chloroplatinic acid, palladium, and a rhodium catalyst.

Further, as the resin, for example, liquid crystal polymer, polyester, polyamide, polyimide, polyphthalamide, polyphenylene sulfide, polycarbonate, polyaryletherketone, polyphenylene oxide, fluororesin, cyanate ester compound, or maleimide compound can also be used.

As the liquid crystal polymer, there are thermotropic liquid crystal polymer exhibiting liquid crystallinity in a molten state and rheotropic liquid crystal polymer exhibiting liquid crystallinity in a solution state, and any liquid crystal polymer may be used.

Examples of the thermotropic liquid crystal polymer include a polymer synthesized from parahydroxybenzoic acid (PHB), terephthalic acid, and 4,4'-biphenol, a polymer synthesized from PHB and 2,6-hydroxynaphthoic acid, and a polymer synthesized from PHB, terephthalic acid, and ethylene glycol.

Examples of the fluororesin include tetrafluoroethylene resin (PTFE), tetrafluoroethylene-hexafluoropropylene copolymer resin (PFEP), and tetrafluoroethylene perfluoroalkyl vinyl ether copolymer resin (PFA).

As the cyanate ester compound, for example, a phenol novolac type cyanate ester compound, a naphthol aralkyl type cyanate ester compound, a biphenyl aralkyl type cyanate ester compound, a naphthylene ether type cyanate ester compound, a xylene resin type cyanate ester compound, and an adamantane skeleton type cyanate ester compound are preferable, and examples thereof include the phenol novolac type cyanate ester compound, the biphenyl aralkyl type cyanate ester compound, and the naphthol aralkyl type cyanate ester compound.

Examples of the maleimide compound include N-phenylmaleimide, N-hydroxyphenylmaleimide, bis(4-maleimidophenyl)methane, 2,2-bis{4-(4-maleimidophenoxy)-phenyl}propane, bis(3,5-dimethyl-4-maleimidophenyl)methane, bis(3-ethyl-5-methyl-4-maleimidophenyl)methane, bis(3,5-diethyl-4-maleimidophenyl)methane, a maleimide compound represented by the following formula (1), and a maleimide compound represented by the following formula (2).

[Chemical Formula 1]

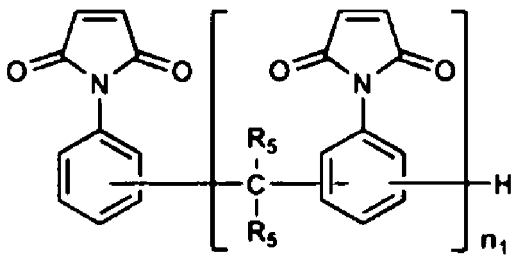

(1)

In the above formula (1), Rs's each independently represents a hydrogen atom or a methyl group, and preferably represents a hydrogen atom. In addition, $n_1$ represents an integer of 1 or more, preferably an integer of 10 or less, and more preferably an integer of 7 or less.

[Chemical Formula 2]

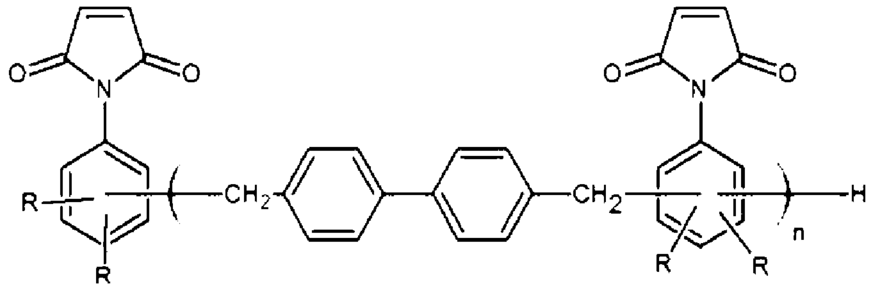

(2)

In the above formula (2), a plurality of Rs each independently represents a hydrogen atom, an alkyl group having 1 to 5 carbon atoms (for example, a methyl group, an ethyl group, a n-propyl group, an isopropyl group, a n-butyl group, an isobutyl group, a t-butyl group, and a n-pentyl group), or a phenyl group, and from the viewpoint of further improving heat resistance and peel strength, R is preferably a group selected from the group consisting of a hydrogen atom, a methyl group, and a phenyl group, more preferably one of a hydrogen atom and a methyl group, and still more preferably a hydrogen atom.

A blending ratio of the resin and the hexagonal boron nitride powder may be appropriately determined according to the application, and for example, the hexagonal boron nitride powder can be preferably blended in an amount of 30 to 90 vol%, more preferably 40 to 80 vol%, and still more preferably 50 to 70 vol% in the entire resin composition.

The resin composition may contain the hexagonal boron nitride and components other than the resin. The resin composition may appropriately contain, for example, an inorganic filler, a curing accelerator, an anti-discoloration agent, a surfactant, a dispersant, a coupling agent, a colorant, a plasticizer, a viscosity modifier, and an antibacterial agent as long as the effect of the present invention is not affected.

Examples of the application of the resin composition of the present invention include a sheet-like laminated material (resin sheet) such as an adhesive film and a prepreg, a circuit board (laminate applications, multilayer printed wiring board applications), a solder resist, an underfill material, a thermal adhesive, a die bonding material, a semiconductor sealing material, a filling resin, a module-embedding resin, a thermal interface material (for example, sheet, gel, and grease), a substrate for a power module, and a heat dissipation member for an electronic component.

The resin composition of the present invention can be used for, for example, circuit board applications. In the circuit board applications, particularly in copper-clad laminate applications in which a resin composition and a copper foil are laminated, examples of suitable resins include epoxy resins, polyimide resins, liquid crystal polymers, fluororesins, cyanate ester compounds, and maleimide compounds. Among them, the fluororesins are particularly preferable resins because they are excellent in high frequency characteristics, heat resistance, weather resistance, chemical resistance, and water repellency in copper-clad laminate applications mounted on reception devices of satellite broadcasting and electronic communication devices such as mobile phones. Further, when the circuit board is manufactured using lead-free solder, since reflow temperature of the lead-free solder is about 260°C, it is preferable to use a liquid crystal polymer having high heat resistance, and the thermotropic liquid crystal polymer is particularly preferred because it is more excellent in heat resistance and flame retardancy.

Further, in the copper-clad laminate applications, a preferred form is to use an epoxy resin and/or a maleimide compound and a cyanate ester compound as the resins. Such a resin composition makes it easy to obtain a resin composition having excellent peel strength and moisture absorption and heat resistance. In this case, as the epoxy resin, a biphenyl aralkyl type epoxy resin, a naphthylene ether type epoxy resin, a polyfunctional phenol type epoxy resin, and a naphthalene type epoxy resin are preferable from the viewpoint of flame retardancy and heat resistance, as the maleimide compound, 2,2'-bis{4-(4-maleimidophenoxy)-phenyl}propane, bis(3-ethyl-5-methyl-4-maleimidophenyl)methane, a maleimide compound represented by the formula (B-1), and the maleimide compound represented by the formula (B-2) are preferable from the viewpoint of a coefficient of thermal expansion and a glass transition temperature, and as the cyanate ester compound, a phenol novolac type cyanate ester compound, a biphenyl aralkyl type cyanate ester compound, and a naphthol aralkyl type cyanate ester compound are preferable from the viewpoint of the glass transition temperature and plating adhesion.

Further, the resin composition of the present invention can also be used as an insulating layer of a multilayer printed wiring board. In this case, as the resin, the epoxy resin is preferably used because it is excellent in heat resistance and adhesion to a copper foil circuit. As the epoxy resin, it is preferable to use an epoxy resin which is liquid at a temperature of 20°C and an epoxy resin which is solid at the temperature of 20°C in combination because a resin composition having excellent flexibility can be obtained and a breaking strength of the insulating layer is improved. Preferable examples of the epoxy resin which is liquid at the temperature of 20°C include the bisphenol A type epoxy

resin, the bisphenol F type epoxy resin, and the naphthalene type epoxy resin. Preferable examples of the epoxy resin which is solid at the temperature of 20°C include the tetrafunctional naphthalene type epoxy resin, the biphenyl type epoxy resin, and the naphthylene ether type epoxy resin. A blending ratio of the epoxy resin which is liquid at the temperature of 20°C and the epoxy resin which is solid at the temperature of 20°C is preferably in a range of 1: 0.1 to 1: 4, and more preferably 1: 0.8 to 1: 2.5 by mass.

Further, when the resin composition of the present invention is used as the underfill material, the resin is preferably an epoxy resin from the viewpoint of, for example, heat resistance, moisture resistance, and mechanical strength, and it is particularly preferable to use an epoxy resin which is liquid at room temperature.

Further, when the resin composition is used as a grease-like thermal interface material, it is preferable to use the silicone-based resin as the resin. As the silicone-based resin, it is preferable to use a polyorganosiloxane represented by the following formula (3) as the addition reaction type silicone resin and a polyorganosiloxane having at least a silicon-bonded hydrogen atom in one molecule as the silicone-based crosslinking agent.

[Chemical Formula 3]

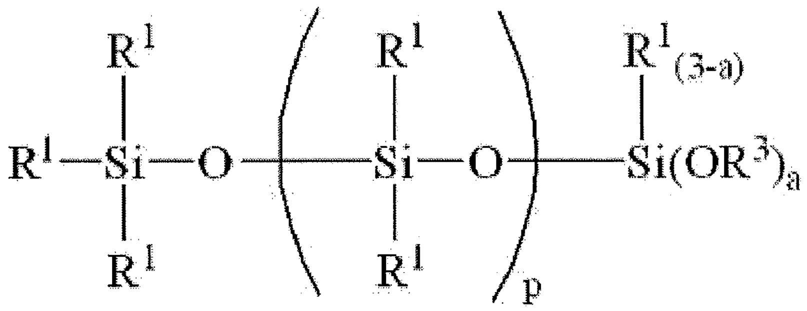

(3)

In the formula, $R^1$ is independently an unsubstituted or substituted monovalent hydrocarbon group, and is preferably a monovalent hydrocarbon group having 1 to 3 carbon atoms. $R^3$ is independently an alkyl group, an alkoxyalkyl group, an alkenyl group, or an acyl group, having 1 to 4 carbon atoms. p is an integer of 5 to 100, and preferably 10 to 50. a is an integer of 1 to 3.

<Method for producing hexagonal boron nitride powder>

A method for producing the hexagonal boron nitride powder of the present invention is not particularly limited, but a typical production method includes: an acid washing step of adding an acid aqueous solution obtained by mixing hydrochloric acid having an iron element of 1 ppm or less and an ignition residue of 5 ppm or less with pure water having a conductivity at 25°C of 5 μS/cm or less to a coarse hexagonal boron nitride powder obtained by a melamine method to form a slurry having a pH adjusted to 1 or less, and stirring and washing the slurry for 8 to 15 hours while maintaining a range of the pH; and a water washing step of supplying the boron nitride powder obtained in the acid washing step into a filter, performing filtration while supplying pure water having a conductivity at 25°C of 5 μS/cm or less, and bringing the boron nitride powder into contact with the pure water until a pH of a filtrate becomes 6 or more.

<Coarse hexagonal boron nitride powder>

In a production method of the present invention, a method for producing the coarse hexagonal boron nitride powder includes a so-called melamine method including a heating step of heating a mixed powder containing boron oxide and a nitrogen-containing organic compound as a method for obtaining the hexagonal boron nitride powder having the average particle size. The melamine method is more preferable than a reduction nitridation method because it is easy to obtain a boron nitride powder having a small particle size and to obtain low aspect ratio particles, and thus it is possible to obtain a boron nitride powder having an average particle size (D50) of 2.0 to 6.0 um, a specific surface area of 4 to 12 $m^2/g$, and an aspect ratio of 1 to 7.

In the method for producing the coarse hexagonal boron nitride powder, examples of the boron oxide contained in the mixed powder include diboron trioxide (boron oxide), diboron dioxide, tetraboron trioxide, tetraboron pentoxide, borax, and anhydrous borax, and among them, the diboron trioxide is preferably used. Use of the diboron trioxide as the boron oxide is industrially beneficial because an inexpensive raw material is used. Note that two or more of boron oxides may be used in combination.

Examples of the nitrogen-containing organic compound contained in the mixed powder include melamine,

ammeline, ammelide, melam, melon, dicyandiamide, and urea, and among them, the melamine is preferably used. Use of the melamine as the nitrogen-containing organic compound is industrially beneficial because an inexpensive raw material is used. Note that two or more of nitrogen-containing organic compounds may be used in combination.

A mass ratio (B/N) of boron atoms to nitrogen atoms in the mixed powder is preferably 0.2 or more and 0.5 or less, and more preferably 0.25 or more and 0.35 or less. When the B/N is 0.2 or more, a B source can be secured, and a sufficient yield can be ensured. Further, when the B/N is 0.5 or less, an N source sufficient for nitriding can be secured. Note that the nitrogen atom in the mixed powder heated in the heating step is derived from the nitrogen-containing organic compound, and the boron atom in the mixed powder heated in the heating step is derived from the boron oxide.

The mixed powder may contain a carbonate or an oxide of an alkali metal and an alkaline earth metal as a fluxing agent in addition to the boron oxide and the nitrogen-containing organic compound. Examples of the carbonate or oxide of the alkali metal and alkaline earth metal include lithium carbonate, sodium carbonate, potassium carbonate, magnesium carbonate, calcium carbonate, strontium carbonate, lithium oxide, sodium oxide, potassium oxide, magnesium oxide, calcium oxide, and strontium oxide. Of these, lithium carbonate is preferred. Lithium carbonate serves as a flux that acts as an aid for growing hexagonal boron nitride primary particles. As a result, growth of the primary particles in the thickness direction is promoted, and thick hexagonal boron nitride particles can be obtained. The orientation of such hexagonal boron nitride particles is suppressed when dispersed in a resin, and the thermal anisotropy of the resin composition can be reduced. Note that two or more of carbonates or oxides of the alkali metal and alkaline earth metal may be used in combination.

Further, a mass ratio ($B/Li_2CO_3$) of boron atoms to lithium carbonate in the mixed powder is preferably 0.22 or more and 0.98 or less, and more preferably 0.30 or more and 0.80 or less. When the $B/Li_2CO_3$ is 0.22 or more, an amount of the flux can be moderately suppressed, so that the hexagonal boron nitride primary particles can be moderately aggregated. Further, when the $B/Li_2CO_3$ is 0.98 or less, a sufficient amount of the flux can be formed, so that hexagonal boron nitride primary particles having the aspect ratio can be uniformly obtained.

In the method for producing the coarse hexagonal boron nitride powder, the mixed powder is preferably heated at a maximum temperature of 1200°C or higher and 1500°C or lower in the heating step. By heating the mixed powder at the temperature of 1200°C or higher, it is possible to prevent the particle size of the hexagonal boron nitride primary particles from being excessively reduced and to suppress the aspect ratio from increasing. The maximum temperature is more preferably 1250°C or higher, and still more preferably 1300°C or higher. Further, by heating the mixed powder at the temperature of 1500°C or lower, volatilization of the fluxing agent can be prevented when the fluxing agent is used, and particularly when the lithium carbonate is used, it is possible to suppress an increase in particle size and aspect ratio of the hexagonal boron nitride primary particles. The maximum temperature is more preferably 1450°C or lower.

In the heating step, the mixed powder is preferably heated under an inert gas atmosphere and under a normal pressure or reduced pressure environment. By heating in the above environment, damage to a heating furnace body can be suppressed. Note that in the present specification, the term "under an inert gas atmosphere" refers to a state in which an inert gas is caused to flow into a container for heating the mixed powder, and a gas inside the container is replaced with the inert gas. An inflow amount of the inert gas is not particularly limited, but the inflow amount of the inert gas may be 5 L/min or more. Further, the inert gas may be, for example, nitrogen gas, carbon dioxide gas, or argon gas.

The crude hexagonal boron nitride powder is obtained by the heating step, but in the present invention, the obtained crude hexagonal boron nitride powder may be supplied into the fluxing agent, and heated at a temperature of 1500 to 2200°C for about 1 to 10 hours to further grow crystals. The hexagonal boron nitride powder obtained after the heating is also treated as the coarse hexagonal boron nitride powder.

<Crushing step>

In the method for producing the hexagonal boron nitride powder of the present invention, since the coarse hexagonal boron nitride powder obtained by the above-described method is aggregated, a crushing step may be provided for the purpose of adjusting the particle size. Such a crushing step is a step of crushing coarse hexagonal boron nitride aggregate particles formed by densely aggregating the hexagonal boron nitride primary particles contained in the coarse hexagonal boron nitride powder. The crushing method is not particularly limited, and may be crushing, for example, by a roll crusher, a jet mill, a bead mill, a planetary mill, or a grinding stone mill. In addition, these crushing methods may be combined, and may be further performed a plurality of times. Note that the metal impurities may be mixed from, for example, devices by the crushing step, but can be highly removed by the acid washing step and the water washing step described later.

<Acid washing step>

In the method for producing the hexagonal boron nitride powder of the present invention, the acid washing step

is a step of adding an acid aqueous solution obtained by mixing hydrochloric acid having an iron element of 1 ppm or less and an ignition residue of 5 ppm or less with pure water having a conductivity of 5 μS/cm or less at 25°C to the coarse hexagonal boron nitride powder obtained by the above method to form a slurry having a pH adjusted to 1 or less, and stirring and washing the slurry for 8 to 15 hours, and preferably 10 to 14 hours while maintaining the range of the pH.

In general, the acid washing step is a step of washing a fired product containing the hexagonal boron nitride powder obtained by the heating step using an acid to dissolve and remove lithium carbonate, boron oxide, or a composite oxide of lithium carbonate and boron oxide adhering to the hexagonal boron nitride powder, impurities soluble in an acid contained in the mixed powder, and an acid soluble material such as an acid soluble foreign matter mixed before the acid washing step, and in the present invention, such a step is carried out for a long time under stirring.

In the acid washing, it is preferred that the pH of the slurry obtained by mixing the coarse hexagonal boron nitride powder with the acid aqueous solution is adjusted to 1 or less throughout a washing time because impurities on the surface of the particles of the coarse hexagonal boron nitride powder are sufficiently dissolved, and a phenomenon that poor acid washing is caused by undissolved impurities remaining in the slurry and adhering to the particles of the hexagonal boron nitride powder can be prevented.

In addition, it is necessary to stir the slurry during the acid washing. By such stirring, the contact between the acid soluble material and the acid aqueous solution can be promoted, local increase in pH near a surface of the acid soluble material due to dissolution of the acid soluble material can be prevented, and poor washing can be prevented by allowing a dissolution reaction to proceed smoothly. A degree of stirring is sufficient to allow the slurry to flow, and specific examples include a method of stirring with a stirring blade.

Furthermore, the washing time is preferably 8 to 15 hours. When the washing time is shorter than 8 hours, the dissolution reaction may not be completed, and the acid soluble material may remain in the slurry, resulting in poor acid washing. When the washing time is 15 hours or more, the efficiency is low and it is not preferable in terms of industrial production. In addition, a washing temperature is preferably 20 to 60°C.

In the acid washing step, distribution of the coarse hexagonal boron nitride powder and the acid aqueous solution in the slurry is preferably such that a mass of the acid aqueous solution is 2 to 5 times a mass of the coarse hexagonal boron nitride powder. If an amount of the acid aqueous solution is small relative to an amount of the coarse hexagonal boron nitride powder, viscosity of the slurry becomes too high, and the entire slurry is not stirred, which may result in poor acid washing. When the amount of the acid aqueous solution is large, there is no problem in stirring, but it is not efficient because an amount of the slurry is large.

The acid used in the acid washing step is preferably a dilute acid such as hydrochloric acid. Then, hydrochloric acid having an iron element of 1 ppm or less and an ignition residue of 5 ppm or less is more preferable, and hydrochloric acid having an iron element of 0.5 ppm or less and an ignition residue of 3 ppm or less is still more preferable. Further, the pure water used in the acid washing step is preferably pure water having a conductivity of 5 μS/cm or less at 25°C, more preferably 1 μS/cm or less at 25°C, and still more preferably 0.5 μS/cm or less at 25°C. Then, an acid aqueous solution obtained by mixing the hydrochloric acid and pure water is preferably used as a washing liquid.

<Water washing step>

In the present invention, the water washing step is a step of supplying the boron nitride powder obtained in the acid washing step into the filter, performing filtration while supplying pure water having a conductivity at 25°C of 5 μS/cm or less, and bringing the boron nitride powder into contact with the pure water until the pH of the filtrate becomes 6 or more.

In general, the water washing step is a step of washing the hexagonal boron nitride powder by bringing the hexagonal boron nitride powder into contact with water in order to remove the acid and the acid soluble material adhering to the hexagonal boron nitride powder in the acid washing step, however, in the present invention, it is possible to highly remove the acid and the acid soluble material by employing a "running water filtration" method in which filtration is performed while supplying the pure water using the pure water in the contact between the hexagonal boron nitride powder obtained in the acid washing step and the water.

The pure water used in the washing is preferably the pure water having a conductivity of 5 μS/cm or less at 25°C, more preferably 1 μS/cm or less at 25°C, and still more preferably 0.5 μS/cm or less at 25°C. That is, when the conductivity of the water is larger than the above range, impurity components adhering to the hexagonal boron nitride powder cannot be sufficiently removed. For example, when water having a conductivity exceeding 5 μS/cm, such as tap water, is used, metal impurities contained in the tap water may remain in the hexagonal boron nitride powder, which is not appropriate.

In the water washing step, the slurry subjected to the acid washing step is supplied into the filter to be separated into the hexagonal boron nitride powder and the washing liquid. The pure water is intermittently, preferably continuously, supplied to the filter, and brought into contact with the hexagonal boron nitride powder to transfer the acid and the acid soluble material adhering to the hexagonal boron nitride powder to the pure water side, and the hexagonal boron nitride powder and the pure water containing the acid and the acid soluble material as a filtrate is immediately separated by

filtration. By performing supply of the pure water and the filtration at the same time, it is possible to always bring new pure water and hexagonal boron nitride powder into contact with each other and simultaneously remove contaminated pure water, to perform advanced washing.

The water washing is continued until the pH of the pure water after contact with the hexagonal boron nitride powder is 6 or more, and preferably 6.5 or more. Further, 1 kg of the hexagonal boron nitride powder is brought into contact with the pure water of 1 to 20 L/min, and preferably 2 to 10 L/min. Furthermore, the washing temperature is preferably 20 to 60°C.

By performing such washing by running water filtration, it is possible to obtain a hexagonal boron nitride powder having an extremely low concentration of metal impurities on the surfaces of the hexagonal boron nitride particles.

The filter used for the running water filtration is not particularly limited, but a filter such as vacuum filtration by suction, filtration by pressurization, or filtration by centrifugation is suitably used.

In the method for producing the hexagonal boron nitride powder of the present invention, at an end of washing with pure water, the filtration is continued with the supply of the pure water stopped, that is, dehydration is performed, so that refined hexagonal boron nitride powder can be obtained.

The dehydration is preferably performed so that the water content is 50 wt% or less, and more preferably 45 wt% or less.

<Drying step>

In the method for producing the hexagonal boron nitride powder of the present invention, it is preferable to perform a drying step following the water washing step. As drying conditions of the hexagonal boron nitride powder, the hexagonal boron nitride powder is died at a temperature of 50°C to 250°C under atmospheric pressure, and preferably under reduced pressure. A drying time is not particularly limited, but drying is preferably performed until the water content reaches 0% as much as possible, and it is generally recommended to perform drying at the above temperature for 1 to 48 hours.

<Other steps>

The method for producing the hexagonal boron nitride powder may include steps other than the above steps. Such steps are referred to as "other steps" in the present specification. Examples of other steps included in the method for producing the hexagonal boron nitride powder include a mixing step and a classification step.

The mixing step is a step of mixing, for example, the boron oxide, the nitrogen-containing organic compound, and the lithium carbonate before the heating step. By mixing the mixed powder in advance, the reaction proceeds substantially uniformly, so that variations in, for example, the particle size of the hexagonal boron nitride primary particles prepared are suppressed.

The classification step is a step of classifying the hexagonal boron nitride powder according to a size of the particles and/or a shape of the particles. A classification operation may be sieving, and may be wet classification or air flow classification.

## Examples

Hereinafter, the present invention will be specifically described with reference to Examples, but the present invention is not limited to these Examples. Test methods are as follows.

<Aspect ratio>

The aspect ratio of the hexagonal boron nitride primary particles was measured using an analytical scanning electron microscope (S-3400N manufactured by Hitachi High-Technologies Corporation). 100 different hexagonal boron nitride primary particles were randomly selected from a scanning electron microscope observation image at a magnification of 5000 times, a length of the major axis and a thickness of the hexagonal boron nitride primary particles were measured, the aspect ratio (length of major axis/length of thickness) of each of the hexagonal boron nitride primary particles was calculated, and an average value thereof was taken as the aspect ratio.

<Water content>

10 g of hexagonal boron nitride powder was collected, and the water content was determined using a moisture meter (MX-50 manufactured by A&D Company, Limited).

<Specific surface area>

The specific surface area of the hexagonal boron nitride powder was measured by the BET method using Macsorb HM model-1201 manufactured by Mountech Co., Ltd.

<Average particle size (D50)>

The particle size distribution of the hexagonal boron nitride powder was measured using a particle size distribution measuring apparatus MT3000 manufactured by Nikkiso Co., Ltd. The measurement sample was prepared by the following method. First, 20 g of ethanol was added as a dispersion medium to a 50 mL screw tube bottle, and 0.3 g of hexagonal boron nitride powder was charged into ethanol. A lid of the screw tube bottle was closed, the screw tube bottle was held by hand, and an operation of "upside down and then back" was set to 1 time, and the operation was continuously repeated 10 times to complete adjustment. Then, the particle size distribution of the measurement sample was measured, and the average particle size D50 based on volume was calculated from obtained results.

<Amount of eluted calcium, amount of eluted silicon, amount of eluted sodium, and amount of eluted iron>

50 g of a sulfuric acid aqueous solution having a concentration of 0.04 mol/L and 2 g of hexagonal boron nitride powder were charged into a 150 cc beaker, and the beaker was shaken and stirred, and then allowed to stand for 120 minutes. Meanwhile, the temperature of the liquid was adjusted to 25°C. Thereafter, boron in the obtained liquid was analyzed by an ICP emission spectrometer (iCAP6500 manufactured by Thermo Fisher Scientific Inc.), and an amount of eluted calcium (ppm), an amount of eluted silicon (ppm), an amount of eluted sodium (ppm), and an amount of eluted iron (ppm) were determined to be used as the concentration of each element on the surface of the hexagonal boron nitride particles constituting the hexagonal boron nitride powder.

<Oxygen concentration measurement>

The oxygen concentration of the hexagonal boron nitride powder was measured using an oxygen/nitrogen analyzer EMGA-620 manufactured by HORIBA, Ltd.

<Conductivity of pure water>

The conductivity of pure water was measured with an electrical conductivity meter (RG-12 manufactured by ORGANO CORPORATION).

<Iron concentration in hydrochloric acid>

As a preparation of a standard sample solution, a standard sample (iron standard solution (10 μg/mL) and hydrochloric acid for precise analysis (manufactured by FUJIFILM Wako Pure Chemical Corporation)) was weighed in a colorimetric tube with a stopper in a total amount of 10 mL so as to have a predetermined amount of iron, 1 to 2 drops of a 0.02 mol/L potassium permanganate solution (manufactured by FUJIFILM Wako Pure Chemical Corporation) and 5 mL of ammonium thiocyanate were added thereto, then pure water was added to adjust an amount of the liquid to 50 mL, and then the mixture was well mixed. Next, as an adjustment of a measurement sample solution, 10 mL of a measurement sample (hydrochloric acid) was collected in another colorimetric tube with a stopper, 1 to 2 drops of a 0.02 mol/L potassium permanganate solution (manufactured by FUJIFILM Wako Pure Chemical Corporation) and 5 mL of ammonium thiocyanate were added thereto, then pure water was added to adjust an amount of the liquid to 50 mL, and then the mixture was well mixed. Then, hues of the measurement sample solution and the standard sample solution were visually compared against a white background, and if the hues matched, the iron concentration in hydrochloric acid was calculated as the amount of iron of the measurement sample. If the hues do not match, the amount of the liquid of the iron standard solution of the standard sample solution was changed, and the hues were compared again.

<Ignition residue of hydrochloric acid>

The ignition residue of hydrochloric acid was measured by the following method. A weight $m_1$ (g) of an evaporating pan that had been washed, dried (105 to 110°C, 30 min), and allowed to cool to room temperature in a desiccator was measured, 85 mL of hydrochloric acid was then weighed in the evaporating pan, and 1 to 2 drops of special grade sulfuric acid (manufactured by FUJIFILM Wako Pure Chemical Corporation) was further added thereto, to obtain a measurement sample. Thereafter, the measurement sample was allowed to stand together with the evaporating pan on

a sand bath set at 200°C until white smoke was not generated, and then was allowed to stand in an electric furnace set at 650°C for 1 hour to be ignited. After ignition, the mixture was dried (105 to 110°C, 30 min) and allowed to cool to room temperature in the desiccator, and then a weight $m_2$ (g) of the evaporating pan was measured. From the obtained results, the ignition residue of hydrochloric acid was determined by the following equation.

$$\text{Ignition residue (\%) of hydrochloric acid} = (m_2 - m_1)/(85 \times \rho) \times 100$$

wherein $\rho$ is a density (g/mL) of hydrochloric acid.

<Preparation of resin composition (resin sheet)>

100 parts by mass of hexagonal boron nitride powder, 22.4 parts by mass of a liquid curable epoxy resin (jER828 manufactured by Mitsubishi Chemical Corporation, bisphenol A type epoxy resin, epoxy equivalent: 184 to 194 g/eq) as a resin, 5.6 parts by mass of an epoxy resin curing agent (jER cure WA manufactured by Mitsubishi Chemical Corporation, modified aromatic amine, amine value 623 to 639), and 225 parts by mass of cyclohexanone (manufactured by Wako Pure Chemical Industries, Ltd., special grade) as a solvent were weighed and mixed using a rotation-revolution mixer (MAZERUSTAR KK-250S manufactured by Kurabo Industries Ltd.).

The viscosity of the resulting mixture was measured at a temperature of 25°C using a Brookfield type rotational viscometer (HBDV2TCP manufactured by Brookfield), and cyclohexanone was additionally blended, stirred and mixed using the rotation-revolution mixer until the viscosity at a shear rate of 200 $s^{-1}$ was in a range of 700 to 800 mPa·s. The obtained composition was coated on a releasable polyimide film (Upilex-50S manufactured by Ube Industries, Ltd., thickness 50 μm) using an automatic coating apparatus (PI-1210 manufactured by TESTER SANGYO CO., LTD.) so as to have a film thickness of 50 um with a Bird applicator. Then, the coated film was air-dried in a draft for 15 minutes, and then dried at 130°C for 40 minutes using a vacuum dryer to remove the solvent and obtain an uncured resin sheet. Subsequently, the two uncured resin sheets together with the releasable polyimide film were stacked such that the uncured resin sheets were in contact with each other, and press-bonded by hot pressing under reduced pressure for 3 minutes under conditions of 100°C and a pressing pressure of 4MPa using a vacuum heating press device (manual hydraulic vacuum hot press manufactured by Imoto machinery Co., Ltd.). Subsequently, the temperature was raised to 150°C, the uncured resin sheet was cured by hot pressing under reduced pressure under conditions of a pressing pressure of 20MPa for 60 minutes, then transferred into a box type oven, heat-treated at 165°C for 2 hours, and then further heat-treated at 190°C for 2 hours to completely cure the uncured resin sheet. Thereafter, releasable polyimide films on both surfaces were peeled off to obtain a resin sheet. The obtained resin sheet had a thickness of 50 um. Further, the hexagonal boron nitride powder in the resin sheet accounted for 65% by volume.

[Example 1]

A mixed powder was prepared by mixing 4450 g of anhydrous borax as the boron oxide and 5580 g of melamine as the nitrogen-containing organic compound. In the prepared mixed powder, B/N was 0.26.

A crude hexagonal boron nitride powder was prepared by heating the prepared mixed powder at a maximum temperature of 1300°C for 1 hour in a nitrogen atmosphere in a heating step using a batch type firing furnace. The prepared coarse hexagonal boron nitride powder was crushed with a stone mill type grinder (Super Mascolloider MKCA6-5J manufactured by Masuko Sangyo Co., Ltd.) at a rotation speed of 2200 rpm and a grindstone interval of 20 μm.

Subsequently, the acid washing step was performed. In the acid washing step, a container was filled with a crushed crude hexagonal boron nitride powder, 35% hydrochloric acid having a purity shown in Table 1, and pure water the same as pure water used in water washing described later, to prepare a slurry, and the slurry was adjusted to have a pH shown in Table 1 while being stirred at a rotation speed of 500 rpm by a stirrer, and treated over a time shown in Table 1. After completion of the acid washing, the water washing step was performed. In the water washing step, the entire amount of the slurry after completion of the acid washing step was supplied to a centrifugal filter (rotation speed: 1900 rpm), and the "running water filtration" was performed while pure water having a conductivity shown in Table 1 was continuously supplied to the boron nitride powder after acid washing present on a filtration surface. After completion of the water washing, supply of the pure water was stopped, and centrifugal dehydration was performed. The hexagonal boron nitride powder after dehydration was dried under reduced pressure to the water content of 0.02% in the drying step, to obtain the hexagonal boron nitride powder. Results of performing the above measurement on the obtained hexagonal boron nitride powder are shown in Table 2.

[Example 2]

A mixed powder was prepared by mixing 3980 g of anhydrous borax as the boron oxide, 6580 g of melamine as the nitrogen-containing organic compound, and 1480 g of lithium carbonate. In the prepared mixed powder, B/N was 0.28, and $B/Li_2CO_3$ was 0.58.
A crude hexagonal boron nitride powder was prepared by heating the prepared mixed powder at a maximum temperature of 1300°C for 1 hour in a nitrogen atmosphere in a heating step using a batch type firing furnace.
The obtained crude hexagonal boron nitride powder was subjected to steps of crushing, acid washing, water washing, and drying in accordance with a method of Example 1 under conditions shown in Table 1 to obtain hexagonal boron nitride powder. Results of performing the above measurement on the obtained hexagonal boron nitride powder are shown in Table 2.

[Example 3]

A mixed powder was prepared by mixing 2850 g of boron oxide as the boron oxide, 5140 g of melamine as the nitrogen-containing organic compound, and 2030 g of lithium carbonate. In the prepared mixed powder, B/N was 0.26, and $B/Li_2CO_3$ was 0.44.
A crude hexagonal boron nitride powder was prepared by heating the prepared mixed powder at a maximum temperature of 1400°C for 1 hour in a nitrogen atmosphere in a heating step using a batch type firing furnace.
The obtained crude hexagonal boron nitride powder was subjected to steps of crushing, acid washing, water washing, and drying in accordance with a method of Example 1 under conditions shown in Table 1 to obtain hexagonal boron nitride powder. Results of performing the above measurement on the obtained hexagonal boron nitride powder are shown in Table 2.

[Example 4]

A hexagonal boron nitride powder was obtained in the same manner as in Example 1 except that the prepared coarse hexagonal boron nitride powder was washed without being crushed. Results of performing the above measurement on the obtained hexagonal boron nitride powder are shown in Table 2.

[Example 5]

A hexagonal boron nitride powder was obtained in the same manner as in Example 1 except that conditions for crushing the prepared coarse hexagonal boron nitride powder with a stone mill type grinder were set to a rotation speed of 2000 rpm and a grindstone interval of 40 um. Results of performing the above measurement on the obtained hexagonal boron nitride powder are shown in Table 2.

[Examples 6 to 10]

Resin sheets were prepared by a method for preparing the resin sheet using hexagonal boron nitride powders prepared in Example 1 to 5. Obtained resin sheets were visually checked, a case where the resin sheet was smooth was evaluated as "O (passed)", and a case where irregularities were generated was evaluated as "X (failed)", to evaluate sheet formation. Evaluation results are shown in Table 3.

[Comparative Example 1]

The same procedure as in Example 1 was carried out except that the pH of the slurry during the acid washing was set to a value shown in Table 1 in the acid washing step. Results of performing the above measurement on the obtained hexagonal boron nitride powder are shown in Table 2.

[Comparative Example 2]

The same procedure as in Example 1 was carried out except that the slurry was not stirred during the acid washing in the acid washing step. Results of performing the above measurement on the obtained hexagonal boron nitride powder are shown in Table 2.

[Comparative Example 3]

The same procedure as in Example 1 was carried out except that an acid washing time was set to a value shown in Table 1 in the acid washing step. Results of performing the above measurement on the obtained hexagonal boron nitride powder are shown in Table 2.

[Comparative Example 4]

The same procedure as in Example 1 was carried out except that the water washing was performed "discontinuously" in the water washing step. In Table 1, for "discontinuous" in the water washing step, a water washing method was employed in which an operation of adding slurry and pure water to a container, stirring the mixture, and dehydrating the mixture by vacuum filtration using suction was repeated 10 times. Results of performing the above measurement on the obtained hexagonal boron nitride powder are shown in Table 2.

[Table 1]

| | pH of slurry | | Hydrochloric acid | | Acid washing time (h) | Conductivity of pure water (μS/cm) | Supply of pure water | pH at the end of water washing |
|---|---|---|---|---|---|---|---|---|
| | Start | End | Iron | Ignition residue | | | | |
| Ex. 1 | 0.3 | 0.4 | 0.3 | 3 | 10 | 0.5 | Continuous | 6.2 |
| Ex. 2 | 0.5 | 0.4 | 0.3 | 3 | 10 | 0.5 | Continuous | 5.8 |
| Ex. 3 | 0.5 | 0.6 | 0.8 | 4 | 8 | 1.0 | Continuous | 6.9 |
| Ex. 4 | 0.7 | 0.9 | 0.3 | 3 | 10 | 0.5 | Continuous | 6.1 |
| Ex. 5 | 0.7 | 0.7 | 0.3 | 3 | 10 | 0.5 | Continuous | 6.5 |
| Comp. Ex. 1 | 2.0 | 2.5 | 0.3 | 3 | 10 | 0.5 | Continuous | 7.0 |
| Comp. Ex. 2 | 0.5 | 0.7 | 0.3 | 3 | 10 (Without stirring) | 0.5 | Continuous | 7.2 |
| Comp. Ex. 3 | 0.5 | 0.6 | 0.3 | 3 | 4 | 0.5 | Continuous | 7.0 |
| Comp. Ex. 4 | 0.4 | 0.5 | 0.8 | 4 | 8 | 1.0 | Discontinuous | 6.5 |

[Table 2]

| | Average particle size (μm) | Specific surface area ($m^2/g$) | Average aspect ratio | Elution volume (ppm) | | | | Oxygen concentration (%) |
|---|---|---|---|---|---|---|---|---|
| | | | | Ca | Si | Na | Fe | |
| Ex. 1 | 2.5 | 9.4 | 3.2 | 0.0 | 1.6 | 0.5 | 0.0 | 0.23 |
| Ex. 2 | 3.0 | 7.3 | 1.4 | 0.0 | 1.5 | 0.0 | 0.0 | 0.24 |
| Ex. 3 | 5.8 | 4.8 | 4.0 | 0.0 | 4.1 | 0.0 | 0.0 | 0.10 |
| Ex. 4 | 5.3 | 6.0 | 3.3 | 1.0 | 4.3 | 4.4 | 0.0 | 0.21 |
| Ex. 5 | 3.3 | 8.6 | 3.1 | 0.0 | 4.8 | 3.0 | 0.0 | 0.26 |
| Comp. Ex. 1 | 2.9 | 9.1 | 3.0 | 61.1 | 1.8 | 13.4 | 0.0 | 0.20 |
| Comp. Ex. 2 | 2.6 | 9.6 | 3.3 | 57.6 | 4.0 | 21.0 | 0.0 | 0.23 |

(continued)

| | Average particle size (μm) | Specific surface area ($m^2/g$) | Average aspect ratio | Elution volume (ppm) | | | | Oxygen concentration (%) |
|---|---|---|---|---|---|---|---|---|
| | | | | Ca | Si | Na | Fe | |
| Comp. Ex. 3 | 2.5 | 9.4 | 3.5 | 62.5 | 3.2 | 17.8 | 0.0 | 0.30 |
| Comp. Ex. 4 | 2.6 | 9.5 | 3.4 | 21.0 | 15.4 | 9.8 | 1.3 | 0.21 |

[Table 3]

| | Boron nitride powder | Sheet formation |
|---|---|---|
| Ex. 6 | Ex. 1 | O |
| Ex. 7 | Ex. 2 | O |
| Ex. 8 | Ex. 3 | O |
| Ex. 9 | Ex. 4 | O |
| Ex. 10 | Ex. 5 | O |

## Claims

1. A hexagonal boron nitride powder having an average particle size (D50) of 2.0 to 6.0 um and a specific surface area measured by a BET method of 4 to 12 $m^2/g$, in which a concentration of a calcium element is 1 ppm or less, a concentration of a silicon element is 5 ppm or less, a concentration of a sodium element is 5 ppm or less, and a concentration of an iron element is 1 ppm or less on a surface of hexagonal boron nitride particles constituting the powder.

2. The hexagonal boron nitride powder according to claim 1, wherein the hexagonal boron nitride powder has an average aspect ratio (major axis/thickness) of 1 to 7.

3. The hexagonal boron nitride powder according to claim 1 or 2, wherein the hexagonal boron nitride powder is a filler for resin.

4. A method for producing a hexagonal boron nitride powder, the method comprising: an acid washing step of adding an acid aqueous solution obtained by mixing hydrochloric acid having an iron element of 1 ppm or less and an ignition residue of 5 ppm or less with pure water having a conductivity at 25°C of 5 μS/cm or less to a coarse hexagonal boron nitride powder obtained by a melamine method to form a slurry having a pH adjusted to 1 or less, and stirring and washing the slurry for 8 to 15 hours while maintaining a range of the pH; and a water washing step of supplying the boron nitride powder obtained in the acid washing step into a filter, performing filtration while supplying pure water having a conductivity at 25°C of 5 μS/cm or less, and bringing the boron nitride powder into contact with the pure water until a pH of a filtrate becomes 6 or more.

5. A resin composition comprising the hexagonal boron nitride powder according to any one of claims 1 to 3 and a resin.

**INTERNATIONAL SEARCH REPORT**

International application No.
**PCT/JP2022/000491**

**A. CLASSIFICATION OF SUBJECT MATTER**

***C01B 21/064***(2006.01)i; ***C08K 3/38***(2006.01)i; ***C08L 101/00***(2006.01)i
FI: C01B21/064 H; C08L101/00; C08K3/38; C01B21/064 M

According to International Patent Classification (IPC) or to both national classification and IPC

**B. FIELDS SEARCHED**

Minimum documentation searched (classification system followed by classification symbols)

C01B21/064; C08K3/38; C08L101/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2010-076956 A (MITSUI CHEMICALS INC.) 08 April 2010 (2010-04-08) example 1, reference example 1 | 1-5 |
| Y | JP 2019-182737 A (TOKUYAMA CORP.) 24 October 2019 (2019-10-24) claim 4, paragraphs [0050]-[0053], examples | 1-5 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 January 2022** | **08 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/000491**

| Patent document cited in search report | Publication date (day/month/year) | Patent family member(s) | Publication date (day/month/year) |
|---|---|---|---|
| JP 2010-076956 A | 08 April 2010 | (Family: none) | |
| JP 2019-182737 A | 24 October 2019 | (Family: none) | |

Form PCT/ISA/210 (patent family annex) (January 2015)